# EUROPEAN PATENT SPECIFICATION

(11) **EP 2 706 510 B1**
(45) Date of publication and mention of the grant of the patent: **30.11.2016**
(21) Application number: 12306074.1
(22) Date of filing: 07.09.2012
(51) Int. Cl.: G07C 5/08, H04L 12/861, G08G 1/00, G07C 5/00

(54) **Method and system for analyzing incident related data**
Verfahren und System zur Analyse von Daten im Zusammenhang mit einem Ereignis
Procédé et système d'analyse de données relatives à un incident

(43) Date of publication of application: 12.03.2014
(73) Proprietor: ALCATEL LUCENT, 92100 Boulogne-Billancourt (FR)
(72) Inventor: Michielsens, Jan, 2240 Zandhoven (BE)
(74) Representative: ALU Antw Patent Attorneys

(56) References cited:
- EP-A1- 1 209 647
- DE-A1-102009 013 765
- US-A1- 2003 097 335
- US-A1- 2007 005 234
- US-A1- 2008 111 666
- US-A1- 2009 015 684
- US-A1- 2012 041 637

## Description

### Field of the Invention

The present invention relates to the field of incident data collection and analysis, in particular with respect to traffic incidents or accidents.

### Background

In the field of aeronautics and automotive transportation, it is known to equip individual airplanes or automobiles with a so-called "black box", i.e. an on-board device that records flight or driving parameters, which may be analyzed afterwards in the event of a crash or an incident. However, these "black boxes" are costly, and so is their extraction from the scene of a crash or incident, and the analysis of their data.

US2012/0041637A1 discloses a diagnostic system for a vehicle that provides vehicle operational data during a fault code occurrence having an onboard diagnostics system for generating vehicle diagnostics codes, an engine control module to monitor vehicle operational data for a plurality of vehicle subsystems; and a remote data storage location wherein the onboard diagnostic system wirelessly transmits a vehicle diagnostic code when the vehicle operates outside of the predetermined operating parameters to the remote data storage location and wherein the vehicle operational data is wirelessly transmitted from the engine control module to the remote data storage location for analysis purposes.

### Summary

It is therefore a goal of embodiments of the present invention, to at least partially overcome the above mentioned disadvantages.

Aspects of the invention are disclosed in the independent claims.

According to an aspect of the invention, there is provided a method for analyzing incident related data, the method comprising at an analysis center: receiving vehicle operation data from a plurality of vehicles, each one of the plurality of vehicles being equipped with at least one sensor producing the vehicle operation data and a mobile data transmission unit operatively connected to the at least one sensor to transmit the vehicle operation data over a wireless network; storing the received vehicle operation data in a data storage; analyzing the vehicle operation data to detect incident conditions related to one or more of the plurality of vehicles; upon detection of incident conditions, generating an incident signal for the one or more of the plurality of vehicles; upon failure to detect incident conditions for any one of the plurality of vehicles during a predetermined amount of time, erasing a portion of the vehicle operation data related to the one of the plurality of vehicles from the data storage.

It is an advantage of the present invention that the "black box" function can be centralized, avoiding the need for dedicated black boxes in every vehicle to be monitored. It is a further advantage of the present invention that the data from different vehicles can be compared and/or correlated, to more easily detect, substantially in real time, incident conditions involving multiple monitored vehicles (such as vehicle collisions). It is a further advantage of the present invention, that the incident signal may be used as a trigger to automatically inform the appropriate services (police, ambulance, mechanic, insurance company) about the nature (and, where this is useful, the location) of the incident.

Moreover, according to claim 1 of the present invention, each one of the plurality of vehicles is configured to transmit a periodic signal, and the detection of incident conditions comprises detecting an incident in relation to a particular vehicle if the periodic signal is not received from the particular vehicle during a predetermined time interval.

Thus, an incident can be detected even if the incident is so sudden and catastrophic that no useful sensor data could be transmitted upon the actual occurrence of the event.

In an embodiment of the method according to the present invention, the detection of incident conditions is based on one or more of: receiving signals indicating sudden extreme deceleration of a vehicle; receiving positioning signals of multiple vehicles converging to the same point, receiving signals indicating the deployment of an air bag or other damage control system; receiving signals indicating a substantial decrease in tire pressure, a loss or lack of fuel, drop in battery tension, or another critical malfunction.

It is an advantage of this embodiment that the most common types of incidents can be recognized on the basis of information from commonly available sensor types.

According to an aspect of the invention, there is provided a computer program comprising code means configured to cause a computer to perform the method as described above.

According to an aspect of the invention, there is provided a system for analyzing incident related data, the system comprising a plurality of vehicles and an analysis center, wherein each one of the vehicles is equipped with at least one sensor producing vehicle operation data and a mobile data transmission unit operatively connected to the at least one sensor to transmit the vehicle operation data over a wireless network, and wherein the analysis center comprises: communications means adapted to receive the vehicle operation data transmitted over the wireless network; processing means, operatively connected to the communications means, the processing means being configured to analyze the vehicle operation data and to detect incident conditions; and a data storage, operatively connected to the processing means, adapted to store portions of the vehicle operation data; wherein the processing means is adapted to erase stored vehicle operation data from the data storage after a predetermined amount of time if no incident has been detected.

Each one of the plurality of vehicles is configured to transmit a periodic signal, and the processing means is further configured to detect incident conditions in relation to a particular vehicle if the periodic signal is not received from the particular vehicle during a predetermined time interval.

In an embodiment of the system according to the invention, the detection of incident conditions is based on one or more of: receiving signals indicating sudden extreme deceleration of a vehicle; receiving positioning signals of multiple vehicles converging to the same point, receiving signals indicating the deployment of an air bag or other damage control system; receiving signals indicating a substantial decrease in tire pressure, a loss or lack of fuel, drop in battery tension, or another critical malfunction.

According to an aspect of the present invention, there is provided a vehicle for use in the method or system as described above, the vehicle comprising at least one sensor producing vehicle operation data and a mobile data transmission unit operatively connected to the at least one sensor to transmit the vehicle operation data over a wireless network.

The technical effects and advantages of the computer program, system, and vehicle according to embodiments of the present invention correspond, *mutatis mutandis,* to those of the corresponding method.

### Brief Description of the Figures

Some embodiments of apparatus and/or methods in accordance with embodiments of the present invention are now described, by way of example only, and with reference to the accompanying drawing, in which:
Figure 1 provides a flow chart of a method according to an embodiment of the present invention; and
Figure 2 provides a schematic overview of a system according to an embodiment of the present invention.

### Description of Embodiments

In the present patent application, the term vehicle is used in its most general sense, and is in particular intended to include automobiles, trucks, trains, airplanes, and helicopters. The vehicles monitored according to the present invention are not necessarily all of the same type; although the invention might be used to monitor a fleet of vehicles of a particular owner (e.g., all the trucks of a particular transportation company), the concept applies equally to situations where the individual vehicle operators are all independent, and simply subscribe to the same "centralized black box service" offered by a particular service provider. The present invention applies to vehicles that have at least one sensor capable of detecting a parameter related to the operation of the vehicle. The parameter may include the vehicle's speed (velocity), acceleration, available fuel, engine speed (e.g., rpm) for one or more engines, engine temperature for one or more engines, oil pressure, GPS location, distance to other vehicles, seat belt use, activation of lights, etc.

The invention is based *inter alia* on the insight of the inventor that mobile wireless machine-to-machine communications provide an adequate means to allow moving machines, such as vehicles, to communicate with a central hub. More particularly, the invention is also based on the insight of the inventor that it is useful to use such data for incident investigation and analysis.

Thus, in the present invention, vehicle operation data is communicated constantly in real-time over a mobile data network to an analysis center to be analyzed. In case of an incident, such as a crash, all relevant information can be deduced from the massive amount of received data and analyzed. This data can then be used by police, insurance companies, car manufacturers, etc., to plan the necessary interventions.

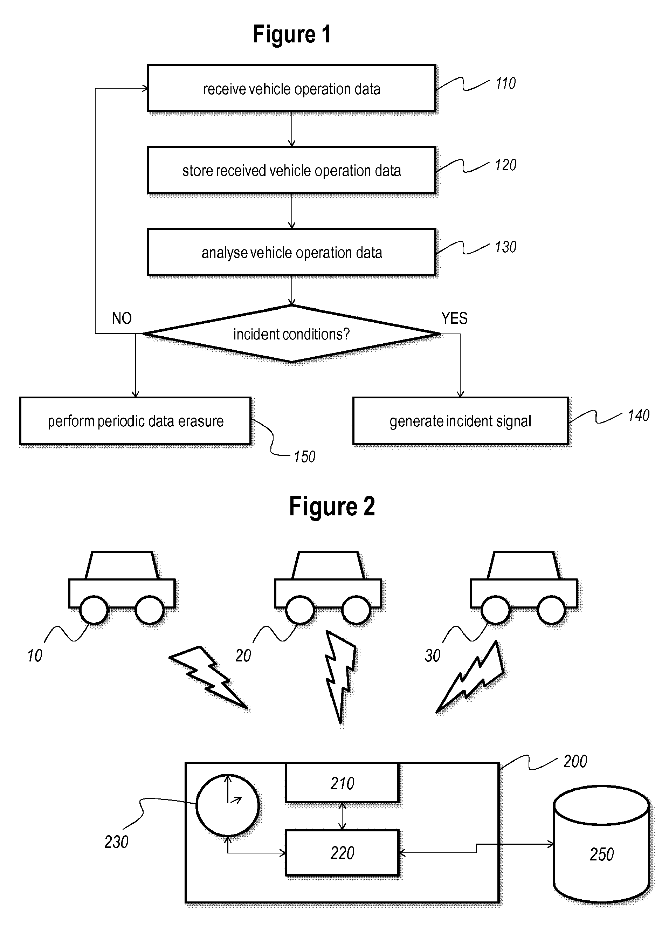

An embodiment of the method according to the present invention will now be described in more detail with reference to Figure 1. The method is illustrated as a flow chart, showing the steps to be carried out at an analysis center **200.**

A first step **110** consists of receiving vehicle operation data from a plurality of vehicles **10, 20, 30,** each one of the vehicles being equipped with at least one sensor producing the vehicle operation data and a mobile data transmission unit to transmit the vehicle operation data over a wireless network. The wireless network may be a mobile network capable of carrying digital data, including without limitation GSM, CDMA, EDGE, UMTS, and LTE networks.

The received data is preferably stored **120** in a data storage. The received data is also analyzed **130** in real-time, in order to detect incident conditions related to one or more of the plurality of vehicles. The analysis may include combining stored data with incoming data.

If incident conditions (see below) are detected, an incident signal is generated **140** for the vehicle or vehicles to which the incident pertains. A malfunction typically pertains to a single vehicle; a collision may pertain to multiple vehicles. Note that a collision between a monitored vehicle and a non-monitored vehicle may be interpreted as a single-vehicle incident, unless there is specific data available that can support the deduction that another vehicle is involved.

The data which is analyzed preferably contains data for a limited amount of time (for instance, 5 minutes) leading up to the incident. All other data, if no incident has been detected, is preferably deleted. In this way, the total amount of used storage space can be limited. The illustrated method therefore includes the step of erasing **150** a portion of the vehicle operation data related to any particular vehicle from the data storage upon failure to detect incident conditions for that vehicle during a predetermined amount of time.

Preferably, each one of the plurality of vehicles is configured to transmit a periodic signal ("keep-alive signal"). The absence of that signal after expiry of the normal repetition interval may be interpreted as an incident.

The system according to the present invention will now be described in more detail with reference to Figure 2.

The system comprises a plurality of vehicles **10, 20, 30.** Without loss of generality, three vehicles are shown in the Figure. As described above, each one of the vehicles **10, 20, 30** is equipped with at least one sensor producing vehicle operation data and a mobile data transmission unit operatively connected to the sensors to transmit the vehicle operation data over a wireless network.

The system further comprises an analysis center **200,** which may include multiple interconnected hardware components, a single hardware component, or any adequate combination of hardware and software. The analysis center **200** comprises communications means **210** adapted to receive the vehicle operation data transmitted over the wireless network, in particular a transceiver connected to the used mobile network.

The analysis center **200** further comprises processing means **220,** operatively connected to the communications means **210,** to analyze the vehicle operation data and to detect incident conditions.

The analysis center **200** further comprises a data storage **250,** operatively connected to the processing means, adapted to store portions of the vehicle operation data.

The processing means **220** is adapted to erase stored vehicle operation data from the data storage after a predetermined amount of time if no incident has been detected, as described above in connection with Figure 1. For the purpose of carrying out this function, the analysis center **200** may comprise a clock **230** of some type.

The analysis center **200** is preferably capable of generating an incident signal upon detection of an incident. The incident signal preferably includes all relevant information that can be deduced from the received data, with respect to the incident. In particular, the incident signal preferably includes incident location information (requiring a positioning system, preferably a satellite based positioning system such as GPS, to be present in the affected vehicle), and information about the nature of the incident (malfunction, lack of fuel, collision, fire, ...). The incident signal may be generated by the processing means **220.**

The analysis center **200** preferably takes care of the data communication, including reliability and security. The analysis center **200** may comprise an Alcatel-lucent M2M data communication and device management server, to carry out the communication related functions. This data will then be analyzed for crash investigation. Thus analysis may be carried out by an Alcatel-Lucent SenseTale platform, provided with an adequate application that links the occurrence of certain signals to the detection of an incident situation.

At the analysis center **200,** incident detection is based on the incoming data from the vehicles **10, 20, 30.** The occurrence of an incident may for instance be deduced from the absence of an expected periodic "keep-alive" signal from a vehicle. In this case, vehicles must be adapted to periodically send a "keep-alive" signal as long as the operational parameters are normal. Preferably, the vehicles are also adapted to send a sign-off signal when they are about to go off the grid for a longer period, e.g. when a car is parked in a non-public space and should not be expected to send "keep-alive" signals until further notice. The occurrence of an incident, such as a crash, may for instance also be deduced from signals indicating sudden extreme deceleration of a vehicle, from positioning (e.g., GPS) signals of multiple vehicles converging to the same point at a certain speed, from signals indicating the deployment of an air bag or other damage control system, and the like. The occurrence of an incident, such as a critical malfunction, may also be deduced from signals indicating a substantial decrease in tire pressure, a loss or lack of fuel, drop in battery tension, and the like. For each of these parameters, a corresponding sensor may be present in the vehicle.

A vehicle **10, 20, 30** for use in the method or system according to the invention comprises at least one sensor producing vehicle operation data and a mobile data transmission unit operatively connected to the at least one sensor to transmit the vehicle operation data over a wireless network. The sensor can be any sensor capable of providing information of the types listed above, including without limitation: a speedometer, an accelerometer, a tachymeter, a satellite positioning system, a fuel gauge, a thermometer, a manometer, etc.

The vehicles used in the present invention must be capable of sustaining machine-to-machine communication. For this purpose, the relevant sensors are operatively connected to a service gateway, running an application that is configured to send sensor data to the analysis center.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared.

Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for analyzing incident related data, the method comprising at an analysis center (200):
- receiving vehicle operation data from a plurality of vehicles (10, 20, 30), each one of said plurality of vehicles (10, 20, 30) being equipped with at least one sensor producing said vehicle operation data and a mobile data transmission unit operatively connected to said at least one sensor to transmit said vehicle operation data over a wireless network (110) ;
- storing said received vehicle operation data in a data storage (120);
- analyzing said vehicle operation data to detect incident conditions related to one or more of said plurality of vehicles (130);
- upon detection of incident conditions, generating an incident signal for said one or more of said plurality of vehicles (140);
- upon failure to detect incident conditions for any one of said plurality of vehicles during a predetermined amount of time, erasing a portion of said vehicle operation data related to said one of said plurality of vehicles from said data storage (150); wherein each one of said plurality of vehicles (10, 20, 30) is configured to transmit a periodic signal, and wherein said detection of incident conditions comprises detecting an incident in relation to a particular vehicle (10, 20, 30) if said periodic signal is not received from said particular vehicle (10, 20, 30) during a predetermined time interval.

2. The method according to claim 1, wherein said detection of incident conditions is based on one or more of:
- receiving signals indicating sudden extreme deceleration of a vehicle (10, 20, 30);
- receiving positioning signals of multiple vehicles (10, 20, 30) converging to the same point, receiving signals indicating the deployment of an air bag or other damage control system;
- receiving signals indicating a substantial decrease in tire pressure, a loss or lack of fuel, drop in battery tension, or another critical malfunction.

3. A computer program comprising code means configured to cause a computer to perform the method of any of the preceding claims.

4. A system for analyzing incident related data, the system comprising a plurality of vehicles (10, 20, 30) and an analysis center (200),
wherein each one of said vehicles (10, 20, 30) is equipped with at least
one sensor producing vehicle operation data and a mobile data transmission unit operatively connected to said at least one sensor to transmit said vehicle operation data over a wireless network, and
wherein said analysis center (200) comprises:
- communications means (210) adapted to receive said vehicle operation data transmitted over said wireless network;
- processing means (220), operatively connected to said communications means, said processing means being configured to analyze said vehicle operation data and to detect incident conditions; and
- a data storage (250), operatively connected to said processing means, adapted to store portions of said vehicle operation data;
wherein said processing means is adapted to erase stored vehicle operation data from said data storage after a predetermined amount of time if no incident has been detected; wherein each one of said plurality of vehicles (10, 20, 30) is configured to transmit a periodic signal, and wherein said processing means (220) is further configured to detect incident conditions in relation to a particular vehicle (10, 20, 30) if said periodic signal is not received from said particular vehicle (10, 20, 30) during a predetermined time interval.

5. The system according to claim 4, wherein said detection of incident conditions is based on one or more of:
- receiving signals indicating sudden extreme deceleration of a vehicle (10, 20, 30);
- receiving positioning signals of multiple vehicles (10, 20, 30) converging to the same point, receiving signals indicating the deployment of an air bag or other damage control system;
- receiving signals indicating a substantial decrease in tire pressure, a loss or lack of fuel, drop in battery tension, or another critical malfunction.

6. A vehicle (10, 20, 30) for use in the method or system according to any of the preceding claims, said vehicle (10, 20, 30) comprising at least one sensor producing vehicle operation data and a mobile data transmission unit operatively connected to said at least one sensor to transmit said vehicle operation data over a wireless network.

## Patentansprüche

1. Verfahren zum Analysieren von vorfallsbezogenen Daten, wobei das Verfahren ein Analysezentrum (200) umfasst:
- Empfangen von Fahrzeugbetriebsdaten von einer Vielzahl von Fahrzeugen (10, 20, 30), wobei jedes Fahrzeug der besagten Vielzahl von Fahrzeugen (10, 20, 30) mit mindestens einem Sensor ausgestattet ist, der besagte Fahrzeugbetriebsdaten erzeugt, und mit einer mobilen Datenübertragungseinheit, die betriebsbereit angeschlossen ist an besagtem mindestens einen Sensor, um besagte Fahrzeugbetriebsdaten über ein drahtloses Netzwerk (110) zu übertragen;
- Speichern besagter empfangener Fahrzeugbetriebsdaten in einem Datenspeicher (120);
- Analysieren besagter Fahrzeugbetriebsdaten zum Erkennen von Vorfallsbedingungen in Bezug auf ein oder mehrere Fahrzeuge besagter Vielzahl von Fahrzeugen (130);
- beim Erkennen von Vorfallsbedingungen, Erstellen eines Vorfallssignals für besagtes eine oder mehrere Fahrzeuge besagter Vielzahl von Fahrzeugen (140);
- beim Fehlschlagen des Erkennens von Vorfallsbedingungen für irgendein Fahrzeug besagter Vielzahl von Fahrzeugen während einer vorbestimmten Zeitdauer, Löschen eines Teils besagter Fahrzeugbetriebsdaten in Bezug auf besagtes eine Fahrzeug besagter Vielzahl von Fahrzeugen von besagtem Datenspeicher (150); wobei jedes Fahrzeug besagter Vielzahl von Fahrzeugen (10, 20, 30) konfiguriert ist zum Übertragen eines periodischen Signals, und wobei besagtes Erkennen von Vorfallsbedingungen das Erkennen eines Vorfalls in Bezug auf ein bestimmtes Fahrzeug (10, 20, 30) umfasst, wenn besagtes periodische Signal nicht von besagtem bestimmten Fahrzeug (10, 20, 30) während einer vorbestimmten Zeitdauer empfangen wird.

2. Verfahren nach Anspruch 1, wobei besagtes Erkennen von Vorfallsbedingungen auf einer oder mehreren der folgenden Angaben basiert:
- Empfangen von Signalen, die ein plötzliches, extremes Abbremsen eines Fahrzeugs (10, 20, 30) anzeigen;
- Empfangen von Positionssignalen mehrerer Fahrzeuge (10, 20, 30), die am selben Punkt konvergieren, Empfangen von Signalen, die den Einsatz eines Airbags oder anderer Schadenskontrollsysteme anzeigen;
- Empfangen von Signalen, die einen wesentlichen Reifendruckabfall, einen Verlust oder ein Auslaufen von Treibstoff, einen Abfall der Batteriespannung oder eine sonstige kritische Störung anzeigen.

3. Computerprogramm, umfassend Codemittel, die konfiguriert sind zum Veranlassen des Computers, das Verfahren eines beliebigen der vorstehenden Ansprüche durchzuführen.

4. System zum Analysieren von vorfallsbezogenen Daten, wobei das System eine Vielzahl von Fahrzeugen (10, 20, 30) und ein Analysezentrum (200) umfasst,
wobei jedes einzelne der besagten Fahrzeuge (10, 20, 30) mindestens einen Sensor umfasst, der Fahrzeugbetriebsdaten erzeugt, und eine mobile Datenübertragungseinheit, die betriebsbereit angeschlossen ist an besagtem mindestens einen Sensor, um besagte Fahrzeugbetriebsdaten über ein drahtloses Netzwerk zu übertragen, und
wobei besagtes Analysezentrum (200) umfasst:
- Kommunikationsmittel (210), ausgelegt zum Empfangen besagter Fahrzeugbetriebsdaten, die über besagtes drahtloses Netzwerk übertragen werden;
- Verarbeitungsmittel (220), betriebsbereit angeschlossen an besagte Kommunikationsmittel, wobei besagte Verarbeitungsmittel konfiguriert sind zum Analysieren besagter Fahrzeugbetriebsdaten und zum Erkennen von Vorfallsbedingungen; und
- einen Datenspeicher (250), der betriebsbereit an das besagte Verarbeitungsmittel angeschlossen ist, ausgelegt für das Speichern von Teilen besagter Fahrzeugbetriebsdaten;
wobei das besagte Verarbeitungsmittel ausgelegt ist zum Löschen gespeicherter Fahrzeugbetriebsdaten von besagtem Datenspeicher nach einer vorbestimmten Zeitdauer, wenn kein Vorfall erkannt worden ist; wobei jedes Fahrzeug besagter Vielzahl von Fahrzeugen (10, 20, 30) konfiguriert ist zum Übertragen eines periodischen Signals und wobei besagtes Verarbeitungsmittel (220) weiterhin konfiguriert ist zum Erkennen von Vorfallsbedingungen in Bezug auf ein bestimmtes Fahrzeug (10, 20, 30), wenn besagtes periodische Signal nicht von besagtem bestimmten Fahrzeug (10, 20, 30) während einer vorbestimmten Zeitdauer empfangen wird.

5. System nach Anspruch 4, wobei besagtes Erkennen von Vorfallsbedingungen auf einer oder mehreren der folgenden Angaben basiert:
- Empfangen von Signalen, die ein plötzliches, extremes Abbremsen eines Fahrzeugs (10, 20, 30) anzeigen;
- Empfangen von Positionssignalen von mehreren Fahrzeugen (10, 20, 30), die am selben Punkt konvergieren, Empfangen von Signalen, die den Einsatz eines Airbags oder anderer Schadenskontrollsysteme anzeigen;
- Empfangen von Signalen, die einen wesentlichen Reifendruckabfall, einen Verlust oder ein Auslaufen von Treibstoff, einen Abfall der Batteriespannung oder eine sonstige kritische Störung anzeigen.

6. Fahrzeug (10, 20, 30) zum Gebrauch in dem Verfahren oder in dem System entsprechend irgendeinem der vorstehenden Ansprüche, wobei besagtes Fahrzeug (10, 20, 30) mindestens einen Sensor umfasst, der Fahrzeugbetriebsdaten erzeugt, und eine mobile Datenübertragungseinheit, die betriebsbereit angeschlossen ist an besagtem mindestens einen Sensor, um besagte Fahrzeugbetriebsdaten über ein drahtloses Netzwerk zu übertragen.

## Revendications

1. Procédé pour analyser des données relatives à un incident, le procédé comprenant au niveau d'un centre d'analyse (200) les étapes suivantes :
- recevoir des données de fonctionnement du véhicule provenant d'une pluralité de véhicules (10, 20, 30), chaque véhicule parmi ladite pluralité de véhicules (10, 20, 30) étant équipé d'au moins un capteur produisant lesdites données de fonctionnement du véhicule et d'une unité mobile de transmission de données connectée de manière opérationnelle audit au moins un capteur pour transmettre lesdites données de fonctionnement du véhicule sur un réseau sans fil (110) ;
- stocker lesdites données de fonctionnement du véhicule reçues dans un stockage de données (120) ;
- analyser lesdites données de fonctionnement du véhicule pour détecter des conditions d'incident relatives à un ou plusieurs véhicules parmi ladite pluralité de véhicules (130) ;
- dès la détection de conditions d'incident, générer un signal d'incident pour ledit ou lesdits véhicules parmi ladite pluralité de véhicules (140) ;
- en cas d'échec de détection de conditions d'incident pour l'un quelconque parmi ladite pluralité de véhicules durant une période prédéterminée, effacer dudit stockage de données (150) une partie desdites données de fonctionnement du véhicule relatives audit ou auxdits véhicules parmi ladite pluralité de véhicules ; dans lequel chaque véhicule parmi ladite pluralité de véhicules (10, 20, 30) est configuré pour transmettre un signal périodique, et dans lequel ladite détection de conditions d'incident comprend la détection d'un incident par rapport à un véhicule particulier (10, 20, 30) si ledit signal périodique ne provient pas dudit véhicule particulier (10, 20, 30) durant un intervalle de temps prédéterminé.

2. Procédé selon la revendication 1, dans lequel ladite détection de conditions d'incident est basée sur une ou plusieurs des actions suivantes :
- recevoir des signaux indiquant une décélération extrême et soudaine d'un véhicule (10, 20, 30) ;
- recevoir des signaux de positionnement de multiples véhicules (10, 20, 30) convergeant vers le même point, recevoir des signaux indiquant le déploiement d'un coussin de sécurité ou d'un autre système de commande d'endommagement ;
- recevoir des signaux indiquant une diminution importante de la pression des pneus, une perte ou un manque de carburant, une chute de la tension de la batterie ou un autre dysfonctionnement critique.

3. Programme informatique comprenant des moyens de code configurés pour entraîner l'exécution du procédé par un ordinateur selon l'une quelconque des revendications précédentes.

4. Système pour analyser des données relatives à un incident, le système comprenant une pluralité de véhicules (10, 20, 30) et un centre d'analyse (200),
dans lequel chacun desdits véhicules (10, 20, 30) est équipé d'au moins un capteur produisant des données de fonctionnement du véhicule et d'une unité mobile de transmission de données connectée de manière opérationnelle audit au moins un capteur pour transmettre lesdites données de fonctionnement du véhicule sur un réseau sans fil, et dans lequel ledit centre d'analyse (200) comprend :
- des moyens de communication (210) adaptés pour recevoir lesdites données de fonctionnement du véhicule transmises sur ledit réseau sans fil ;
- des moyens de traitement (220), connectés de manière opérationnelle auxdits moyens de communication, lesdits moyens de traitement étant configurés pour analyser lesdites données de fonctionnement du véhicule et pour détecter des conditions d'incident ; et
- un stockage de données (250), connecté de manière opérationnelle auxdits moyens de traitement, adapté pour stocker des parties desdites données de fonctionnement du véhicule ;
dans lequel lesdits moyens de traitement sont adaptés pour effacer dudit stockage de données des données de fonctionnement du véhicule stockées après une période prédéterminée si aucun incident n'a été détecté ; dans lequel chaque véhicule parmi ladite pluralité de véhicules (10, 20, 30) est configuré pour transmettre un signal périodique, et dans lequel lesdits moyens de traitement (220) sont en outre configurés pour détecter des conditions d'incident par rapport à un véhicule particulier (10, 20, 30) si ledit signal périodique ne provient pas dudit véhicule particulier (10, 20, 30) durant un intervalle de temps prédéterminé.

5. Système selon la revendication 4, dans lequel ladite détection de conditions d'incident est basée sur une ou plusieurs des actions suivantes :
- recevoir des signaux indiquant une décélération extrême et soudaine d'un véhicule (10, 20, 30) ;
- recevoir des signaux de positionnement de multiples véhicules (10, 20, 30) convergeant vers le même point, recevoir des signaux indiquant le déploiement d'un coussin de sécurité ou d'un autre système de commande d'endommagement ;
- recevoir des signaux indiquant une diminution importante de la pression des pneus, une perte ou un manque de carburant, une chute de la tension de la batterie ou un autre dysfonctionnement critique.

6. Véhicule (10, 20, 30) destiné à être utilisé dans le procédé ou le système selon l'une quelconque des revendications précédentes, ledit véhicule (10, 20, 30) comprenant au moins un capteur produisant des données de fonctionnement du véhicule et une unité mobile de transmission de données connectée de manière opérationnelle audit au moins un capteur pour transmettre lesdites données de fonctionnement du véhicule sur un réseau sans fil.
